# EUROPEAN PATENT APPLICATION

(11) **EP 4 804 262 A1**
(43) Date of publication of application: **09.09.2026**
(21) Application number: 24885506.6
(22) Date of filing: 21.10.2024
(51) Int. Cl.: H01M 10/04, H01G 11/28, H01G 11/68, H01G 11/80, H01M 4/02, H01M 4/66, H01M 50/184, H01M 50/186, H01M 50/193

(54) **POWER STORAGE DEVICE**

(30) Priority: 02.11.2023 JP 2023188650
(71) Applicant: KABUSHIKI KAISHA TOYOTA JIDOSHOKKI, Kariya-shi, Aichi 448-8671 (JP)
(72) Inventor: NATSUI Keisuke, Kariya-shi, Aichi 448-8671 (JP); ICHIKAWA Yuki, Kariya-shi, Aichi 448-8671 (JP); NAKAGAWA Yuta, Kariya-shi, Aichi 448-8671 (JP); NAKAMURA Tomohiro, Kariya-shi, Aichi 448-8671 (JP); HIROSE Takayuki, Kariya-shi, Aichi 448-8671 (JP)
(74) Representative: TBK
(86) International application number: PCT/JP2024/037333
(87) International publication number: WO 2025/094733

(57) **Abstract**

This power storage device (10) comprises a power storage cell (20) that is comprised of a positive electrode (21), a negative electrode (22), a separator (23), and a sealing part (24) that forms a sealed space for housing a liquid electrolyte between the positive electrode (21) and the negative electrode (22). The positive electrode (21) has a positive electrode active material layer (21b) that is formed on a first surface (21a1) of a positive electrode current collector (21a). The first surface (21a1) of the positive electrode current collector (21a) is formed of aluminum. The sealing part (24) is formed of an acid-modified polyolefin resin, and is bonded to the first surface (21a1) of the positive electrode current collector (21a). The positive electrode (21) comprises a carbon coating layer (M) that is provided, at a bonded portion with the sealing part (24), on the first surface (21a1) of the positive electrode current collector (21a). The carbon coating layer (M) contains carbon particles and a coating layer binding agent. The basis weight of the carbon coating layer M is 0.2 g/m² or more.

## Description

### TECHNICAL FIELD

The present disclosure relates to a power storage device.

### BACKGROUND ART

Patent Literature 1 discloses a low-profile type power storage device formed by stacking separately produced power storage cells in series. Each power storage cell includes a positive electrode, a negative electrode, and a separator. The positive electrode includes a positive electrode active material layer applied to a central portion of one surface of a positive electrode current collector, which has the form of a foil. The negative electrode includes a negative electrode active material layer applied to a central portion of one surface of a negative electrode current collector, which has the form of a foil. The negative electrode is arranged with the negative electrode active material layer facing the positive electrode active material layer of the positive electrode. The separator is arranged between the positive electrode and the negative electrode.

In addition, the above-described power storage cell includes a sealing portion arranged between the positive electrode and the negative electrode on an outer side of the positive electrode active material layer and the negative electrode active material layer. The sealing portion maintains a gap between the positive electrode current collector and the negative electrode current collector to prevent a short circuit between the current collectors, and provides a liquid tight seal between the positive electrode current collector and the negative electrode current collector, thereby forming a sealed space for accommodating a liquid electrolyte between the positive electrode current collector and the negative electrode current collector.

### CITATION LIST

### Patent Literature

Patent Literature 1: JP2017-16825A

### SUMMARY OF INVENTION

### Technical Problem

In the power storage device of the conventional structure, when load is applied to a part where the collector is adhered to the sealing portion such as when, for example, the internal pressure of the sealed space increases, the sealing portion may become separated from the collector. Peeling of the sealing portion can cause a short circuit between the current collectors and leakage of the liquid electrolyte.

### Solution to Problem

In one aspect of the present disclosure, a power storage device includes a power storage cell. The power storage cell is formed by a positive electrode in which a positive electrode active material layer is provided on a first surface of a positive electrode current collector, a negative electrode in which a negative electrode active material layer is provided on a first surface of a negative electrode current collector, the negative electrode active material layer being disposed to face the positive electrode active material layer of the positive electrode, a separator disposed between the positive electrode active material layer and the negative electrode active material layer, and a sealing portion disposed between the positive electrode and the negative electrode so as to surround a periphery of the positive electrode active material layer and a periphery of the negative electrode active material layer, the sealing portion being adhered to a first surface of the positive electrode current collector and a first surface of the negative electrode current collector so as to form a sealed space for accommodating a liquid electrolyte between the positive electrode and the negative electrode. The sealing portion is formed of an acid-modified polyolefin resin. The first surface of the positive electrode current collector is formed of aluminum. The positive electrode includes a carbon coating layer provided on a portion of the first surface of the positive electrode current collector that is bonded to the sealing portion. The carbon coating layer includes carbon particles and a coating layer binder. The carbon coating layer has a weight per unit area of 0.2 g/m² or more.

In the above-described power storage device, the weight per unit area of the carbon coating layer is preferably 1.0 g/m² or less.

In the above-described power storage device, the coating layer binder preferably includes a resin having a carboxyl group.

In the above-described power storage device, the carbon coating layer is preferably provided over an entirety of the first surface of the positive electrode current collector.

In the above-described power storage device, the power storage cell is preferably one of multiple stacked power storage cells. The power storage device preferably further includes a bipolar electrode in which a surface of the positive electrode current collector of the positive electrode included in one of adjacent two of the power storage cells, the surface being located on an opposite side from the first surface of the positive electrode current collector, is joined to a surface of the negative electrode current collector of the negative electrode included in the other of the two adjacent power storage cells, the surface being located on an opposite side from the first surface of the negative electrode current collector.

In the above-described power storage device, the first surface of the negative electrode current collector of the bipolar electrode is preferably formed of copper.

In the above-described power storage device, the positive electrode current collector of the bipolar electrode is preferably an aluminum foil. The negative electrode current collector of the bipolar electrode is preferably a copper foil. The bipolar electrode is preferably formed by bonding the positive electrode current collector and the negative electrode current collector by a conductive adhesive layer. The conductive adhesive layer preferably includes an adhesive and conductive particles. The conductive particles preferably include a resin core and a conductive layer located on a surface of the core. A content of the conductive particles in the conductive adhesive layer is preferably in a range of 0.1 vol% to 1.0 vol%.

In the above-described power storage device, the bipolar electrode preferably has the carbon coating layer provided on both the first surface of the positive electrode current collector and the first surface of the negative electrode current collector. Advantageous Effects of Invention

The present invention improves bonding strength of the sealing portion to the current collector.

### BRIEF DESCRIPTION OF DRAWING

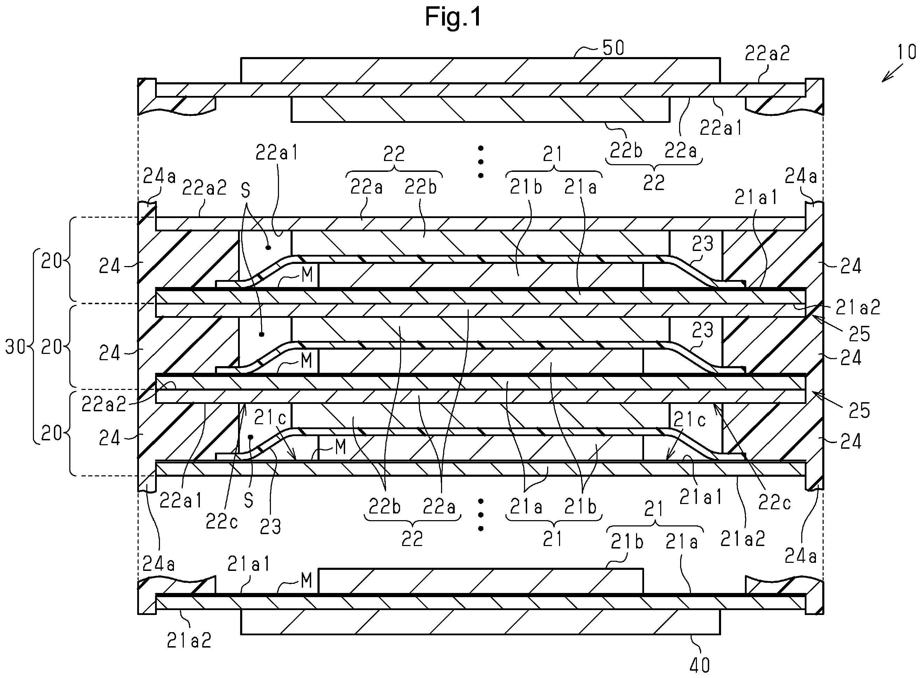

[Fig. 1] Fig. 1 is a cross-sectional view of a power storage device.

### DESCRIPTION OF EMBODIMENTS

An embodiment of the present invention will now be described with reference to the drawing.

A power storage device 10 shown in Fig. 1 is, for example, a power storage module used as a battery for various types of vehicles such as a forklift, a hybrid electric vehicle, and a battery electric vehicle. The power storage device 10 is, for example, a rechargeable battery such as a nickel metal hydride rechargeable battery or a lithium-ion rechargeable battery. The power storage device 10 may alternatively be an electric double-layer capacitor. In the present embodiment, a case in which the power storage device 10 is a lithium-ion rechargeable battery is illustrated.

### Power Storage Device

As illustrated in Fig. 1, the power storage device 10 includes a cell stack 30 (stacked body) in which multiple power storage cells 20 are stacked (laminated) in a stacking direction. Hereinafter, the stacking direction of the power storage cells 20 will be simply referred to as the stacking direction. Each power storage cell 20 includes a positive electrode 21, a negative electrode 22, a separator 23, and a sealing portion 24.

The positive electrode 21 includes a positive electrode current collector 21a and a positive electrode active material layer 21b provided on a first surface 21a1 of the positive electrode current collector 21a. In the present embodiment, the positive electrode 21, the positive electrode current collector 21a, and the positive electrode active material layer 21b correspond to an electrode, a current collector, and an active material layer, respectively.

In plan view as viewed from the stacking direction (hereinafter, simply referred to as plan view), the positive electrode active material layer 21b is formed in a central portion of the first surface 21a1 of the positive electrode current collector 21a. A peripheral edge portion of the first surface 21a1 of the positive electrode current collector 21a in plan view is an uncoated positive electrode portion 21c, on which the positive electrode active material layer 21b is not provided. The uncoated positive electrode portion 21c is disposed to surround the positive electrode active material layer 21b in plan view.

The negative electrode 22 includes a negative electrode current collector 22a and a negative electrode active material layer 22b provided on a first surface 22a1 of the negative electrode current collector 22a. In plan view, the negative electrode active material layer 22b is formed in a central portion of the first surface 22a1 of the negative electrode current collector 22a. A peripheral edge portion of the first surface 22a1 of the negative electrode current collector 22a in plan view is an uncoated negative electrode portion 22c, on which the negative electrode active material layer 22b is not provided. The uncoated negative electrode portion 22c is disposed to surround the periphery of the negative electrode active material layer 22b in plan view.

The positive electrode 21 and the negative electrode 22 are disposed such that the positive electrode active material layer 21b and the negative electrode active material layer 22b face each other in the stacking direction. In other words, the direction in which the positive electrode 21 and the negative electrode 22 face each other coincides with the stacking direction. The negative electrode active material layer 22b is formed to be slightly larger than the positive electrode active material layer 21b, and, in plan view as viewed from the stacking direction, the entire formation region of the positive electrode active material layer 21b is located within the formation region of the negative electrode active material layer 22b.

The positive electrode current collector 21a includes a second surface 21a2 located on an opposite side from the first surface 21a1, and the negative electrode current collector 22a includes a second surface 22a2 located on an opposite side from the first surface 22a1. The cell stack 30 has a structure in which multiple power storage cells 20 are stacked such that the second surface 21a2 of each positive electrode current collector 21a and the second surface 22a2 of the corresponding negative electrode current collector 22a are in contact with each other. As a result, the power storage cells 20 forming the cell stack 30 are connected in series.

In the cell stack 30, a pseudo bipolar electrode 25 is formed by two power storage cells 20 adjacent to each other in the stacking direction, in which the positive electrode current collector 21a and the negative electrode current collector 22a that are in contact with each other are regarded as a single current collector. The pseudo bipolar electrode 25 includes a current collector having a structure in which the positive electrode current collector 21a and the negative electrode current collector 22a are stacked, a positive electrode active material layer 21b formed on a surface on one side of the current collector, and a negative electrode active material layer 22b formed on a surface on the other side of the current collector.

The positive electrode current collector 21a and the negative electrode current collector 22a may alternatively form a bipolar current collector in which the second surface 21a2 of the positive electrode current collector 21a and the second surface 22a2 of the negative electrode current collector 22a are joined to each other. In this case, the positive electrode 21 and the negative electrode 22 form a bipolar electrode 25 including a single bipolar current collector formed by joining the positive electrode current collector 21a and the negative electrode current collector 22a to each other. In other words, the bipolar electrode 25 is configured such that a surface of the positive electrode current collector 21a of the positive electrode 21 forming one of two adjacent power storage cells 20, the surface being located opposite to the first surface 21a1, is joined to a surface of the negative electrode current collector 22a of the negative electrode 22 forming the other of the two adjacent power storage cells 20, the surface being located opposite to the first surface 22a1.

The separator 23 is a member disposed between the positive electrode 21 and the negative electrode 22, and separates the positive electrode 21 from the negative electrode 22 to prevent a short circuit caused by contact between the electrodes while allowing passage of charge carriers such as lithium ions.

The separator 23 is, for example, a porous sheet or a nonwoven fabric including a polymer that absorbs and retains a liquid electrolyte. Examples of the material forming the separator 23 include polypropylene, polyethylene, polyolefin, and polyester. The separator 23 may have a single-layer structure or a multilayer structure. The multilayer structure may include, for example, an adhesive layer, or a ceramic layer as a heat-resistant layer.

The sealing portion 24 is disposed between the first surface 22a1 of the positive electrode current collector 21a of the positive electrode 21 and the first surface 22a1 of the negative electrode current collector 22a of the negative electrode 22, and on an outer side of the positive electrode active material layer 21b and the negative electrode active material layer 22b, and is bonded to both the positive electrode current collector 21a and the negative electrode current collector 22a. The sealing portion 24 prevents a short circuit between the current collectors by electrically insulating the positive electrode current collector 21a and the negative electrode current collector 22a from each other.

In plan view, the sealing portion 24 extends along peripheral edge portions of the positive electrode current collector 21a and the negative electrode current collector 22a and is formed in a frame shape that surrounds the positive electrode active material layer 21b and the negative electrode active material layer 22b. The sealing portion 24 is disposed between the uncoated positive electrode portion 21c of the first surface 21a1 of the positive electrode current collector 21a and the uncoated negative electrode portion 22c of the first surface 22a1 of the negative electrode current collector 22a.

A sealed space S surrounded by the frame-shaped sealing portion 24, the positive electrode 21, and the negative electrode 22 is formed in each power storage cell 20. The separator 23 and liquid electrolyte are accommodated in the sealed space S. The peripheral edge portion of the separator 23 is embedded in the sealing portion 24.

By sealing the sealed space S between the positive electrode 21 and the negative electrode 22, the sealing portion 24 suppresses permeation of the liquid electrolyte accommodated in the sealed space S to the outside. The sealing portion 24 is also able to suppress entry of moisture into the sealed space S from outside the power storage device 10. Further, the sealing portion 24 is able to suppress leakage of gas generated from the positive electrode 21 or the negative electrode 22 due to a charge-discharge reaction or the like, to the outside of the power storage device 10.

The sealing portion 24 of each power storage cell 20 includes an outer peripheral portion 24a extending outward from the edges of the positive electrode current collector 21a and the negative electrode current collector 22a. The outer peripheral portion 24a protrudes, as viewed from the stacking direction, in a direction orthogonal to the stacking direction beyond the peripheral edges of the positive electrode current collector 21a and the negative electrode current collector 22a. Power storage cells 20 adjacent to each other in the stacking direction are integrated by bonding the outer peripheral portions 24a of their respective sealing portions 24 to each other. Examples of methods for bonding adjacent sealing portions 24 include known welding methods such as thermal welding, ultrasonic welding, and infrared welding.

The power storage device 10 includes two conductive bodies composed of a positive electrode energization plate 40 and a negative electrode energization plate 50 arranged so as to sandwich the cell stack 30 in the stacking direction of the cell stack 30. The positive electrode energization plate 40 and the negative electrode energization plate 50 are each formed of a highly conductive material.

The positive electrode energization plate 40 is electrically connected to the second surface 21a2 of the positive electrode current collector 21a of the positive electrode 21 disposed at the outermost position at one end in the stacking direction. The negative electrode energization plate 50 is electrically connected to the second surface 22a2 of the negative electrode current collector 22a of the negative electrode 22 disposed at the outermost position at the other end in the stacking direction.

Charging and discharging of the power storage device 10 are performed through terminals provided on the positive electrode energization plate 40 and the negative electrode energization plate 50, respectively. As a material forming the positive electrode energization plate 40, for example, the same material as that forming the positive electrode current collector 21a can be used. The positive electrode energization plate 40 may be formed of a metal plate thicker than the positive electrode current collector 21a used in the cell stack 30. As a material forming the negative electrode energization plate 50, the same material as that forming the negative electrode current collector 22a can be used, for example. The negative electrode energization plate 50 may be formed of a metal plate thicker than the negative electrode current collector 22a used in the cell stack 30.

Next, details of the positive electrode current collector 21a, the negative electrode current collector 22a, the positive electrode active material layer 21b, the negative electrode active material layer 22b, the liquid electrolyte, and the sealing portion 24 will be described.

### Positive Electrode Current Collector and Negative Electrode Current Collector

The positive electrode current collector 21a is a chemically inert electric conductor that continuously conducts current through the positive electrode active material layer 21b during charging and discharging of the lithium-ion rechargeable battery. One example of the positive electrode current collector 21a is an aluminum current collector having an aluminum surface, which serves as the first surface 21a1. The aluminum current collector may be a monolithic body made entirely of aluminum, or a composite body including an aluminum portion and a portion made of a material other than aluminum. Examples of such a monolithic member include aluminum foil such as rolled aluminum foil. Examples of the composite include a multilayer structure in which a layer forming the first surface 21a1 is an aluminum layer, and a substrate having a surface including the first surface 21a1 that is covered with an aluminum film.

Examples of materials other than aluminum include metal materials, electrically conductive resin materials, and electrically conductive inorganic materials. Examples of the metal materials include copper, nickel, titanium, and stainless steel (for example, SUS304, SUS316, SUS301, and SUS304 as specified in JIS G 4305:2015). Examples of the electrically conductive resin materials include electrically conductive polymer materials, or resins obtained by adding a conductive filler as needed to a non-conductive polymer material. The aluminum current collector may take the form of, for example, a foil, sheet, or film. The thickness of the aluminum current collector is, for example, from 1 to 100 µm.

The negative electrode current collector 22a is a chemically inert electrical conductor that continuously conducts current to the negative electrode active material layer 22b during discharge or charge of a lithium-ion rechargeable battery. One example of the negative electrode current collector 22a is a copper current collector having a surface serving as the first surface 22a1, the surface being formed of copper. The copper current collector may be a monolithic member entirely formed of copper, or may be a composite having a portion formed of copper and a portion formed of a material other than copper. Examples of such a monolithic member include copper foil such as electrolytic copper foil. Examples of such a composite include a multilayer structure in which a layer forming the first surface 22a1 is a copper layer, and a substrate that has a surface including the first surface 22a1 is coated with a copper film.

Examples of materials other than copper include metal materials, electrically conductive resin materials, and electrically conductive inorganic materials. Examples of the metal materials include aluminum, nickel, titanium, and stainless steel (for example, SUS304, SUS316, SUS301, and SUS304 as specified in JIS G 4305:2015). Examples of the electrically conductive resin materials include electrically conductive polymer materials, or resins obtained by adding a conductive filler as needed to a non-conductive polymer material. The copper current collector may take the form of, for example, a foil, sheet, or film. The thickness of the aluminum current collector is, for example, from 1 to 100 µm.

One preferred example of a combination of the positive electrode current collector 21a and the negative electrode current collector 22a is a configuration in which the positive electrode current collector 21a is formed of an aluminum foil serving as an aluminum current collector, and the negative electrode current collector 22a is formed of a copper foil serving as a copper current collector. Examples of the bipolar current collector include a current collector formed by laminating aluminum foils together, a current collector formed by laminating an aluminum foil and a copper foil together, and a current collector obtained by copper-plating a surface of an aluminum foil.

The positive electrode current collector 21a and the negative electrode current collector 22a, which form the bipolar current collector, are, for example, bonded to each other via an adhesive layer. The adhesive layer has electrical conductivity and electrically connects the positive electrode current collector 21a to the negative electrode current collector 22a. The adhesive layer includes, for example, an adhesive component and a conductive component dispersed in the adhesive component. Examples of the adhesive component include polyolefin resins such as polypropylene and polyethylene. The adhesive component may be a single type or a combination of two or more types. The adhesive component may further include a curing agent such as an isocyanate-based curing agent or an epoxy-based curing agent. One example of the adhesive component includes a polyolefin resin and an epoxy-based curing agent. In this case gas generation associated with the curing reaction is suppressed. Examples of the conductive component include conductive particles and conductive fillers. Examples of the conductive particles include metal particles such as aluminum particles, nickel particles, SUS particles, silver particles, gold particles, copper particles, titanium particles, and alloy particles, as well as carbon particles such as graphite particles. The conductive particles may also be spherical particles having a resin or ceramic core particle with a surface coated with a metal film. Examples of the conductive filler include carbon nanotubes. The conductive component may be a single type or a combination of two or more types. The adhesive component may be electrically conductive. Examples of electrically conductive adhesive components include electrically conductive polymer materials. In this case, when the adhesive component itself has electrical conductivity, the conductive component dispersed in the adhesive component may be omitted.

In addition, a carbon coating layer M is provided on the first surface 21a1 of the positive electrode current collector 21a. The carbon coating layer M will be described in detail later.

### Positive Electrode Active Material Layer and Negative Electrode Active Material Layer

The positive electrode active material layer 21b includes a positive electrode active material capable of storing and releasing charge carriers such as lithium ions. As the positive electrode active material, any material usable as a positive electrode active material for a lithium-ion rechargeable battery may be employed, such as lithium composite metal oxides having a layered rock-salt structure, metal oxides having a spinel structure, and polyanion-based compounds. Two or more positive electrode active materials may also be used in combination. In the present embodiment, the positive electrode active material layer 21b includes olivine-type lithium iron phosphate (LiFePO₄) as a polyanion-based compound.

The negative electrode active material layer 22b is not particularly limited as long as it is a simple substance, alloy, or compound capable of storing and releasing charge carriers such as lithium ions. Examples of negative electrode active materials include Li, carbon, metal compounds, and elements capable of alloying with lithium or compounds thereof. Examples of carbon include natural graphite, artificial graphite, hard carbon (non-graphitizable carbon), and soft carbon (graphitizable carbon). Examples of artificial graphite include highly oriented graphite and mesocarbon microbeads. Examples of elements capable of alloying with lithium include silicon and tin. In the present embodiment, the negative electrode active material layer 22b includes graphite as a carbon-based material.

Each of the positive electrode active material layer 21b and the negative electrode active material layer 22b (hereinafter, also simply referred to as an active material layer) may further include a conductive additive for enhancing electrical conductivity, a binder, an electrolyte (such as a polymer matrix, an ion-conductive polymer, or a liquid electrolyte), and an electrolyte supporting salt (a lithium salt) for enhancing ion conductivity. The components included in the active material layer, the mixing ratios of those components, and the thickness of the active material layer are not particularly limited, and conventional knowledge relating to lithium-ion rechargeable batteries may be appropriately referenced.

The conductive additive is added to enhance the electrical conductivity of the positive electrode 21 or the negative electrode 22. Examples of the conductive additive include acetylene black, carbon black, and graphite.

Examples of the binder include the following: fluorine-containing resins such as polyvinylidene fluoride, polytetrafluoroethylene, and fluorine rubber; thermoplastic resins such as polypropylene and polyethylene; imide-based resins such as polyimide and polyamide-imide; alkoxysilyl group-containing resin; acrylic resins such as poly(meth)acrylic; styrene-butadiene rubber; carboxymethyl cellulose; alginates such as sodium alginate and ammonium alginate; water-soluble cellulose ester crosslinked products; and starch-acrylic acid graft polymers. These binders may be used alone or in combination of two or more. Examples of a solvent or a dispersion medium include water and N-methyl-2-pyrrolidone.

The method for forming the active material layer on the surfaces of the positive electrode current collector 21a and the negative electrode current collector 22a is not particularly limited, and known methods such as roll coating may be employed.

In order to improve the thermal stability of the positive electrode 21 or the negative electrode 22, the above-described heat-resistant layer may be provided on the surface of the active material layer.

The weight per unit area of the active material layer is not particularly limited, and conventional knowledge of lithium-ion rechargeable batteries may be appropriately referenced. Preferably, the weight per unit area of the active material layer is increased to increase the energy density of the power storage cells 20. The weight per unit area of the positive electrode active material layer 21b is 55 to 90 mg/cm², preferably 60 mg/cm² or more, and more preferably 70 mg/cm² or more. The weight per unit area of the negative electrode active material layer 22b is, for example, 25 to 45 mg/cm², and preferably 30 mg/cm² or more.

### Sealing Portion

The sealing portion 24 is formed of an acid-modified polyolefin resin. Examples of the acid-modified polyolefin resin include acid-modified polyethylene, acid-modified polypropylene, acid-modified isoprene, and acid-modified polybutene. Examples of acid-modifying groups include carboxylic acid groups, maleic acid groups, and maleic anhydride groups. The acid-modified polyolefin resin forming the sealing portion 24 may be of one type or a combination of two or more types. The acid-modified polyolefin resin forming the sealing portion 24 may be a thermoplastic resin or a thermosetting resin.

The melting point Tm1 of the acid-modified polyolefin resin forming the sealing portion 24 is, for example, in a range of 90°C to 170°C.

The thickness of the sealing portion 24 is preferably, for example, in a range of 50 µm to 1000 µm, and more preferably in a range of 100 µm to 800 µm. The thickness of the sealing portion 24 refers to the thickness of a portion located between the first surface 21a1 of the positive electrode current collector 21a and the first surface 22a1 of the negative electrode current collector 22a.

The sealing portion 24 is bonded to the first surface 21a1 of the positive electrode current collector 21a; more specifically to the carbon coating layer M provided on the first surface 21a1. The sealing portion 24 is also bonded to the first surface 22a1 of the negative electrode current collector 22a.

### Liquid Electrolyte

The liquid electrolyte includes a non-aqueous solvent and an electrolyte salt dissolved in the non-aqueous solvent. As the electrolyte salt, known lithium salts such as LiClO₄, LiAsF₆, LiPF₆, LiBF₄, LiCF₃SO₃, LiN(FSO₂)₂, LiN(CF₃SO₂)₂ may be used. As the non-aqueous solvent, known solvents such as cyclic carbonates, cyclic esters, chain carbonates, chain esters, and ethers can be used. These known solvent materials may be used in a combination of two or more thereof.

### Carbon Coating Layer

The carbon coating layer M applied to the first surface 21a1 of the positive electrode current collector 21a will now be described.

In the present embodiment, the carbon coating layer M is applied to the entire first surface 21a1 of the positive electrode current collector 21a. Accordingly, the first surface 21a1 of the positive electrode current collector 21a is bonded to the sealing portion 24 via the carbon coating layer M. In other words, the sealing portion 24 is bonded to the carbon coating layer M provided on the first surface 21a1 of the positive electrode current collector 21a.

The carbon coating layer M includes carbon particles and a coating layer binder.

The carbon particles may be of a known carbon material used for the carbon coating layer such as graphite, acetylene black, or the like.

Examples of materials forming the coating layer binder include resins having carboxyl groups, such as acrylic resins and carboxyl-modified styrene-butadiene rubber. The material forming the coating layer binder is preferably an acrylic resin.

Examples of the acrylic resin include homopolymers of acrylic monomers such as acrylic acid, methacrylic acid, and (meth)acrylic acid esters, as well as (meth)acrylic copolymers including such acrylic monomers. In the present embodiment, (meth)acrylic acid refers to acrylic acid or methacrylic acid.

Examples of the (meth)acrylic acid esters include methyl (meth)acrylate, ethyl (meth)acrylate, isopropyl (meth)acrylate, n-butyl (meth)acrylate, and isobutyl (meth)acrylate.

In the (meth)acrylic copolymers, examples of other comonomers copolymerized together with the acrylic monomers include α-olefins, styrene, α-methylstyrene, vinyltoluene, acrylonitrile, methacrylonitrile, and vinyl acetate. These comonomers may be present in the acrylic resin in the form of random copolymers, graft copolymers, or block copolymers. Examples of the (meth)acrylic copolymers include silicon-modified acrylic styrene resins, carboxyl-modified acrylic styrene resins, and hydroxyl-modified acrylic resins. The material forming the coating layer binder may be a single type or a combination of two or more types.

The carbon coating layer M is preferably formed so as to have a large number of carboxyl groups present on its surface. For example, as an indication that a large number of carboxyl groups are present on the surface, the contact angle of water with respect to the surface of the carbon coating layer M is relatively small. The surface of the carbon coating layer M has a water contact angle of, for example, 40° or less, and preferably 30° or less.

The glass transition temperature Tg2 of the coating layer binder is, for example, in a range of 0°C to 150°C. When bonding the sealing portion 24 by thermal welding, it is preferable to heat the sealing material forming the sealing portion 24 at a temperature exceeding the glass transition temperature Tg2 of the coating layer binder; that is, at a temperature higher than or equal to the melting point Tm1 of the acid-modified polyolefin resin forming the sealing portion 24. In this case, heating for bonding the sealing portion 24 causes the coating layer binder included in the carbon coating layer M to soften, thereby facilitating compatibility between the coating layer binder and the sealing portion 24. Accordingly, the glass transition temperature Tg2 of the coating layer binder is preferably lower than the melting point Tm1 of the acid-modified polyolefin resin forming the sealing portion 24 (Tg2 < Tm1). The difference between the melting point Tm1 of the acid-modified polyolefin resin and the glass transition temperature Tg2 of the coating layer binding agent (Tm1 - Tg2) is, for example, in a range of 5°C to 100°C.

The weight per unit area of the carbon coating layer M is 0.2 g/m² or more, preferably 0.3 g/m² or more, and more preferably 0.4 g/m² or more. When the weight per unit area is 0.2 g/m² or more, an improvement in bonding strength is achieved by interposing the carbon coating layer M between the first surface 21a1 of the positive electrode current collector 21a and the sealing portion 24.

The weight per unit area of the carbon coating layer M is, for example, 1.2 g/m² or less, and preferably 1.0 g/m² or less. Within the range in which the weight per unit area of the carbon coating layer M is 0.2 g/m² or more, the above-described effect of improving bonding strength tends to decrease as the weight per unit area increases. When the weight per unit area is 1.2 g/m² or less, the decrease in the above-described bonding strength improvement effect is suppressed. In addition, increasing the weight per unit area results in formation of a thicker carbon coating layer M. If the carbon coating layer M is excessively thick, liquid electrolyte may permeate through the carbon coating layer M, potentially causing leakage of the liquid electrolyte through the carbon coating layer M. When the weight per unit area is 1.0 g/m² or less, leakage of the liquid electrolyte to the outside of the power storage cell 20 through the carbon coating layer M is suppressed.

The thickness of the carbon coating layer M is, for example, in a range of 0.1 µm to 5 µm, and is preferably in a range of 0.5 µm to 2 µm.

The content ratio of carbon particles in the carbon coating layer M is, for example, 13 mass% or more, and preferably 30 mass% or more. The content ratio of carbon particles in the carbon coating layer M is, for example, 90 mass% or less, and preferably 70 mass% or less.

The content ratio of the coating layer binder in the carbon coating layer M is, for example, 10 mass% or more, and preferably 30 mass% or more. The content ratio of the coating layer binder in the carbon coating layer M is, for example, 87 mass% or less, and preferably 70 mass% or less. The mass ratio of the carbon particles to the coating layer binder in the carbon coating layer M (carbon particles:coating layer binder) is, for example, from 13:87 to 90:10.

Further, the carbon coating layer M may include other components such as a dispersant. Examples of the dispersant include carboxyethyl cellulose. The other components refer to components other than the carbon particles and the coating layer binder. The content ratio of the other components in the carbon coating layer M is, for example, 20 mass% or less, and preferably 15 mass% or less. In other words, the total content ratio of the carbon particles and the coating layer binder in the carbon coating layer M is, for example, 80 mass% or more, and preferably 85 mass% or more.

Next, a method for manufacturing the power storage device 10 according to the present embodiment will be described.

The power storage device 10 is manufactured by sequentially performing an electrode formation step, a power storage cell formation step, and a cell stack formation step. As one example, a case will be described in which the positive electrode current collector 21a is formed of aluminum foil and the negative electrode current collector 22a is formed of copper foil.

### Electrode Formation Step

The electrode formation step includes a positive electrode formation step for forming the positive electrode 21 and a negative electrode formation step for forming the negative electrode 22.

In the positive electrode formation step, first, the carbon coating layer M is formed over the entirety of the first surface 21a1 of the aluminum foil serving as the positive electrode current collector 21a. Prior to formation of the carbon coating layer M, the first surface 21a1 of the aluminum foil is subjected to corona discharge treatment. The corona discharge treatment forms hydrophilic groups (OH groups) on the first surface 21a1 of the aluminum foil. As a method for forming the carbon coating layer M, known methods applicable to film formation, such as solution-based processes and vapor deposition-based processes, may be employed.

One example of a solution-based process is described below. First, a carbon paste is prepared by kneading carbon particles, the coating layer binder, and an aqueous solvent. A coating film is formed by applying the carbon paste over the entirety of the first surface 21a1 of the positive electrode current collector 21a to a specified thickness. The formed coating film is dried and solidified to form the carbon coating layer M. Examples of a treatment for solidifying the coating film of the carbon paste include drying to evaporate the solvent, followed by heating to a temperature higher than or equal to the glass transition temperature Tg2 of the coating layer binder and then cooling to solidify the coating film. Examples of the aqueous solvent used for the carbon paste include water and a mixed solvent of water and an organic solvent. Examples of the organic solvent used in the mixed solvent include N-methyl-2-pyrrolidone (NMP).

When forming the bipolar electrode 25 including a bipolar current collector, instead of using aluminum foil as the positive electrode current collector 21a, a current collector formed by laminating aluminum foils together, a current collector formed by laminating an aluminum foil and a copper foil together, or a current collector obtained by copper-plating a surface of an aluminum foil is used.

One example of a bipolar current collector formed by laminating the positive electrode current collector 21a and the negative electrode current collector 22a together will be described below.

The bipolar current collector includes the positive electrode current collector 21a and the negative electrode current collector 22a bonded to each other by a conductive adhesive layer. In this case, the positive electrode current collector 21a is, for example, an aluminum foil having a thickness in a range of 20 µm to 100 µm, and the negative electrode current collector 22a is, for example, a copper foil having a thickness in a range of 5 µm to 10 µm.

The conductive adhesive layer includes an adhesive and conductive particles.

The adhesive is not particularly limited, and known adhesives applicable to bonding metals together may be used. One example of the adhesive is an adhesive including a polyolefin resin and an epoxy-based curing agent. In this case, since the adhesive has high electrolyte resistance, favorable joint strength is maintained over a long period of time. In addition, employing an epoxy-based curing agent as a curing agent used in combination with the polyolefin resin reliably reduces gas generation caused by a curing reaction between the polyolefin resin and the curing agent during manufacture of the bipolar current collector.

The conductive particles are included to impart electrical conductivity to the conductive adhesive layer. The aluminum foil and the copper foil bonded by the conductive adhesive layer are electrically connected through the conductive particles. One example of the conductive particles is particles having a resin core and a conductive layer located on the surface of the core.

The conductive layer is, for example, a metal layer. Examples of metals forming the conductive layer include gold, silver, copper, platinum, nickel, palladium, and aluminum. The metal forming the conductive layer may be an alloy. One example of the conductive layer covers the entire surface of the core.

The content of the conductive particles in the conductive adhesive layer is, for example, in a range of 0.1 vol% to 1.0 vol%. This further reduces the internal resistance of the bipolar current collector while ensuring joint strength between the aluminum foil and the copper foil via the conductive adhesive layer.
In addition, when the content is 1.0 vol% or less, that is, when the content of the adhesive in the conductive adhesive layer is relatively large, a conductive adhesive layer having flat surfaces on both sides is formed.

The average particle diameter of the conductive particles in the thickness direction of the conductive adhesive layer (hereinafter referred to as the average particle diameter of the conductive particles) is larger than the average thickness of the conductive adhesive layer. The average particle diameter of the conductive particles is, for example, at least 1.0 times, and not more than 1.3 times, the average thickness of the conductive adhesive layer.

The average thickness of the conductive adhesive layer is, for example, in a range of 2.0 µm to 5.0 µm.

The average particle diameter of the conductive particles is an average value of particle diameters (maximum lengths) in the thickness direction of the conductive adhesive layer. The average particle diameter of the conductive particles and the average thickness of the conductive adhesive layer can be measured, for example, based on observation of a cross section of the conductive adhesive layer using an electron microscope such as a scanning electron microscope (SEM) or a transmission electron microscope (TEM).

The coefficient of variation indicating variation in the particle size distribution of the conductive particles is, for example, 10% or less, and preferably 5% or less. A smaller coefficient of variation means a narrower particle size distribution of the conductive particles. Using a material having a small coefficient of variation suppresses deformation of the aluminum foil and the copper foil. This improves the smoothness of the surfaces of the aluminum foil and the copper foil.

Next, a positive electrode mixture that becomes the positive electrode active material layer 21b upon solidification is applied to a central portion of the first surface 21a1 of the aluminum foil on which the carbon coating layer M has been formed so as to have a specified thickness. Thereafter, a solidification treatment appropriate to the positive electrode mixture is performed to form the positive electrode active material layer 21b. Similarly, a negative electrode mixture that becomes the negative electrode active material layer 22b upon solidification is applied to a central portion of the first surface 22a1 of the copper foil serving as the negative electrode current collector 22a so as to have a predetermined thickness, and thereafter, a solidification treatment appropriate to the negative electrode mixture is performed to form the negative electrode active material layer 22b.

### Power Storage Cell Formation Step

In the power storage cell formation step, first, the positive electrode 21 and the negative electrode 22 are arranged with the separator 23 interposed therebetween such that the positive electrode active material layer 21b and the negative electrode active material layer 22b face each other in the stacking direction. In addition, a sealing material that becomes the sealing portion 24 is arranged between the positive electrode 21 and the negative electrode 22 and on an outer side of the positive electrode current collector 21a and the negative electrode current collector 22a. As the sealing material, a resin sheet made of an acid-modified polyolefin resin and cut into the same shape as the shape of the sealing portion 24 in plan view is used. At this time, the sealing material is arranged so as to be in contact with the carbon coating layer M on the first surface 21a1 of the positive electrode current collector 21a.

Thereafter, the positive electrode 21, the negative electrode 22, the separator 23, and the sealing material are bonded by welding, thereby forming an integrated assembly in which the positive electrode 21, the negative electrode 22, the separator 23, and the sealing portion 24 are integrated. Examples of methods for bonding the sealing material include known welding methods such as thermal welding, ultrasonic welding, and infrared welding.

When forming the sealing portion 24 by thermal welding, the sealing material may be heated to a temperature higher than or equal to the melting point Tm1 of the acid-modified polyolefin resin forming the sealing material, and then cooled and solidified. During this process, when the glass transition temperature Tg2 of the coating layer binder is lower than the melting point Tm1 of the acid-modified polyolefin resin, the coating layer binder also softens, thereby facilitating compatibility between the coating layer binder and the acid-modified polyolefin resin.

Next, a liquid electrolyte is injected into the sealed space S inside the assembly through an injection port provided in a portion of the sealing portion 24, and then the injection port is sealed. This forms the power storage cell 20.

### Cell Stack Formation Step

In the cell stack formation step, first, multiple power storage cells 20 are stacked in the stacking direction such that the second surface 21a2 of the positive electrode current collector 21a and the second surface 22a2 of the negative electrode current collector 22a face each other. Thereafter, the power storage cells 20 are integrated by bonding the outer peripheral portions 24a of the sealing portions 24 of the power storage cells 20 adjacent to each other in the stacking direction to each other.

Next, the positive electrode energization plate 40 is placed on and fixed to the second surface 21a2 of the positive electrode current collector 21a of the positive electrode 21 that is disposed outermost at one end in the stacking direction, in a state of being electrically connected to the second surface 21a2. Similarly, the negative electrode energization plate 50 is placed on and fixed to the second surface 22a2 of the negative electrode current collector 22a of the negative electrode 22 that is disposed outermost at the other end in the stacking direction, in a state of being electrically connected to the second surface 22a2.

### Operation

Operation of the present embodiment will now be described.

In the power storage device 10 of the present embodiment, the carbon coating layer M is provided over the entirety of the first surface 21a1 of the positive electrode current collector 21a. The sealing portion 24 formed of an acid-modified polyolefin resin is bonded to the carbon coating layer M provided on the first surface 21a1 of the positive electrode current collector 21a.

With this configuration, the first surface 21a1 of the positive electrode current collector 21a bonds with the coating layer binder included in the carbon coating layer M. This bonding is considered to be either or both of ester bonding and hydrogen bonding. The ester bonding is formed when the coating layer binder includes a resin having carboxyl groups.

The ester bonding is, for example, a bonding structure (-COOMe) in which a hydroxyl group (Me-OH) on the first surface 21a1 of the positive electrode current collector 21a and a carboxyl group (-COOH) of the coating layer binder are ester-bonded. Me refers to a metal forming the current collector. The hydrogen bonding is a bonding structure in which a hydroxyl group (Me-OH) on the first surface 21a1 of the positive electrode current collector 21a is hydrogen-bonded to either or both of hydroxyl groups and carboxyl groups of a material forming the carbon coating layer M. The hydroxyl groups are either or both of hydroxyl groups (C-OH) on surfaces of the carbon particles and hydroxyl groups (C-OH) of the coating layer binder.

At an interface between the sealing portion 24 and the carbon coating layer M, the acid-modified polyolefin resin forming the sealing portion 24 bonds with the carbon particles included in the carbon coating layer M. This bonding is considered to be either or both of ester bonding and hydrogen bonding. The ester bonding is a bonding structure (-COOC) in which a hydroxyl group (C-OH) on a surface of the carbon particles is ester-bonded to a carboxyl group (-COOH) of the acid-modified polyolefin resin. The hydrogen bonding is a bonding structure in which either or both of hydroxyl groups and carboxyl groups of a material forming the carbon coating layer M is hydrogen-bonded to a carboxyl group (-COOH) of the acid-modified polyolefin resin. The hydroxyl groups are either or both of hydroxyl groups (C-OH) on surfaces of the carbon particles and hydroxyl groups (C-OH) of the coating layer binder. Formation of the above bonding structures at the interface between the positive electrode current collector 21a and the carbon coating layer M and at the interface between the sealing portion 24 and the carbon coating layer M causes the sealing portion 24 to be bonded to the first surface 21a1 of the positive electrode current collector 21a via the carbon coating layer M.

As described above, according to the configuration of the present embodiment, bonding structures are formed at each of the interface between the first surface 21a1 of the positive electrode current collector 21a and the carbon coating layer M and the interface between the sealing portion 24 and the carbon coating layer M. In addition, the coating layer binder included in the carbon coating layer M and the sealing portion 24 are compatible with each other and tightly bonded. This improves bonding strength of the sealing portion 24 to the positive electrode current collector 21a. Specifically, since the carbon coating layer M includes carbon particles, a surface of the carbon coating layer M is roughened with fine irregularities as compared with the first surface 21a1 of the positive electrode current collector 21a. In this case, at the interface between the sealing portion 24 and the carbon coating layer M, a bonding structure based on an anchor effect is also formed by resin of the sealing portion 24 entering into irregularities on the surface of the carbon coating layer M. This improves bonding strength of the sealing portion 24 to the positive electrode current collector 21a.

The above-described effect of improving bonding strength due to the carbon coating layer M being interposed between the first surface 21a1 of the positive electrode current collector 21a and the sealing portion 24 is achieved when the weight per unit area of the carbon coating layer M is 0.2 g/m² or more. When the weight per unit area of the carbon coating layer M is 0.2 g/m² or more, the first surface 21a1 of the positive electrode current collector 21a can be appropriately covered with the carbon coating layer M. In other words, the surface condition at an interface of the positive electrode current collector 21a with the sealing portion 24 can be changed from a state in which properties based mainly on the first surface 21a1 of the positive electrode current collector 21a are exhibited to a state in which properties based mainly on the carbon coating layer M are exhibited. Such properties include, for example, surface wettability and smoothness.

### Advantages

The present embodiment provides the following advantages.
(1) The power storage device 10 includes multiple power storage cells 20. Each power storage cell 20 includes a positive electrode 21, a negative electrode 22, a separator 23, and a sealing portion 24. In the positive electrode 21, a positive electrode active material layer 21b is formed on the first surface 21a1 of the positive electrode current collector 21a. In the negative electrode 22, a negative electrode active material layer 22b is formed on the first surface 22a1 of the negative electrode current collector 22a. The separator 23 is disposed between the positive electrode active material layer 21b and the negative electrode active material layer 22b. The sealing portion 24 is bonded to the first surfaces 21a1, 22a1 of the positive electrode current collector 21a and the negative electrode current collector 22a, thereby forming a sealed space that accommodates a liquid electrolyte between the positive electrode 21 and the negative electrode 22. The sealing portion 24 is formed of an acid-modified polyolefin resin. The first surface 21a1 of the positive electrode current collector 21a is formed of aluminum. The positive electrode 21 includes a carbon coating layer M provided at a portion of the first surface 21a1 of the positive electrode current collector 21a that is bonded to the sealing portion 24. The carbon coating layer M includes carbon particles and a coating layer binder. The weight per unit area of the carbon coating layer M is 0.2 g/m² or more.
   With the above-described configuration, bonding structures are formed at each of the interface between the first surface 21a1 of the positive electrode current collector 21a and the carbon coating layer M and the interface between the sealing portion 24 and the carbon coating layer M. In addition, the coating layer binder included in the carbon coating layer M and the sealing portion 24 are compatible with each other and tightly bonded. This improves bonding strength of the sealing portion 24 to the positive electrode current collector 21a.
(2) The weight per unit area of the carbon coating layer is 1.0 g/m² or less.
   The above-described configuration therefore suppresses leakage of the liquid electrolyte due to permeation through the carbon coating layer M.
(3) The coating layer binder includes a resin having carboxyl groups.
   With the above-described configuration, ester bonding is formed at each of the interface between the first surface 21a1 of the positive electrode current collector 21a and the carbon coating layer M and the interface between the sealing portion 24 and the carbon coating layer M. The advantage (1) is therefore obtained more prominently.
(4) The carbon coating layer M is applied to the entire first surface 21a1 of the positive electrode current collector 21a.
   This configuration simplifies the process for forming the carbon coating layer M, as compared with a configuration in which the carbon coating layer M is provided only on a portion of the first surface 21a1 of the positive electrode current collector 21a.
(5) The power storage device 10 includes multiple power storage cells 20 stacked in the stacking direction, and includes bipolar electrodes 25. In each of the bipolar electrodes 25, a positive electrode current collector 21a of the positive electrode 21 constituting one of two adjacent power storage cells 20 and a negative electrode current collector 22a of the negative electrode 22 constituting the other adjacent power storage cell 20 are joined together. The bipolar electrode 25 is configured such that a surface (second surface 21a2) opposite the first surface 21a1 of the positive electrode current collector 21a and a surface (second surface 22a2) opposite the first surface 22a1 of the negative electrode current collector 22a are joined together.
   This configuration improves bonding strength of the sealing portions 24 in the power storage device 10 including the bipolar electrodes 25.
(6) The first surface 22a1 of the negative electrode current collector 22a is formed of copper.
   Aluminum has a higher standard electrode potential than copper. Accordingly, the first surface 21a1 of the positive electrode current collector 21a formed of aluminum is more likely to be oxidized than the first surface 22a1 of the negative electrode current collector 22a formed of copper. Therefore, providing the carbon coating layer M on the first surface 21a1 of the positive electrode current collector 21a formed of aluminum suppresses oxidation of the first surface 21a1 of the positive electrode current collector 21a due to heat applied during a manufacturing process of the power storage device 10. Examples of processes in which such heat is applied include heating during bonding of the positive electrode current collector 21a and the negative electrode current collector 22a, and heating during solidification of the positive electrode active material layer 21b.
(7) The positive electrode current collector 21a of each bipolar electrode 25 is an aluminum foil, and the negative electrode current collector 22a is a copper foil. Each bipolar electrode 25 includes the positive electrode current collector 21a and the negative electrode current collector 22a bonded to each other by a conductive adhesive layer. The conductive adhesive layer includes an adhesive and conductive particles. The conductive particles have a resin core and a conductive layer located on a surface of the core. The content of the conductive particles in the conductive adhesive layer is in a range of 0.1 vol% to 1.0 vol%.

Since the content of the adhesive in the conductive adhesive layer is relatively high and conductive particles having a resin core are used, a conductive adhesive layer having flat surfaces on both sides can be formed. This improves surface smoothness of the aluminum foil disposed along the conductive adhesive layer. In this case, the carbon coating layer M is readily formed uniformly on the surface of the aluminum foil serving as the positive electrode current collector 21a. Since the carbon coating layer M is uniformly formed, the advantage (1) based on the carbon coating layer M is more reliably obtained.

The above-described embodiment may be modified as follows. The above-described embodiment and the following modifications can be combined if the combined modifications remain technically consistent with each other.
- The carbon coating layer M may be applied to only a portion of the part adhered to the sealing portion 24 in the first surface 21a1 of the positive electrode current collector 21a. For example, the part adhered to the sealing portion 24 in the first surface 21a1 of the positive electrode current collector 21a may include a portion where the carbon coating layer M is not applied. In any case, preferably, the carbon coating layer M is formed on a part adhered to the sealing portion 24 in the first surface 21a1 of the positive electrode current collector 21a and has a closed shape surrounding the sealed space S. Further, the carbon coating layer M may be applied partially or entirely to the part that is not adhered to the sealing portion 24 in the first surface 21a1 of the positive electrode current collector 21a.
- Instead of the first surface 21a1 of the positive electrode current collector 21a, the carbon coating layer M may be provided on the first surface 22a1 of the negative electrode current collector 22a. Further, the carbon coating layer M may be applied to both the first surface 21a1 of the positive electrode current collector 21a and the first surface 22a1 of the negative electrode current collector 22a. In these cases, bonding strength of the sealing portion 24 to the first surface 22a1 of the negative electrode current collector 22a is improved.
- The shapes of the positive electrode current collector 21a and the positive electrode active material layer 21b in plan view are not particularly limited, and may be a polygonal shape such as a rectangular shape, a circular shape, or an elliptical shape. The same applies to the negative electrode current collector 22a and the negative electrode active material layer 22b.
- The shape of the sealing portion 24 in plan view is not particularly limited, and may be a polygonal shape such as a rectangular shape, a circular shape, or an elliptical shape.

A conductive layer that is in close contact with the positive electrode current collector 21a may be disposed between the positive electrode energization plate 40 and the positive electrode current collector 21a in order to improve conductive contact between these members. Examples of a conductive layer include a layer including carbon, such as acetylene black or graphite, and a layer having a lower hardness than the positive electrode current collector 21a, such as a plated layer of Au or the like. Further, a similar conductive layer may be arranged between the negative electrode energization plate 50 and the negative electrode current collector 22a.
- The power storage cells 20 of the power storage device 10 are not particularly limited in number. There may be only one power storage cell 20 in the power storage device 10.
- The positive electrode active material layer 21b or the negative electrode active material layer 22b may be provided on the second surface 21a2 of the positive electrode current collector 21a. Further, the positive electrode active material layer 21b or the negative electrode active material layer 22b may be provided on the second surface 22a2 of the negative electrode current collector 22a.
- The power storage device 10 may include a constraining member to constrain the cell stack 30. The constraining member applies a constraining load in the stacking direction of the cell stack 30 to a region in which the power storage cells 20 face each other; in particular, to where the positive electrode active material layer 21b overlaps the negative electrode active material layer 22b in plan view.

As long as a constraining load can be applied to the cell stack 30, the specific structure of the constraining member is not particularly limited. The constraining member includes, for example, flat constraining plates arranged at the opposite ends of the cell stack 30 in the stacking direction to sandwich the cell stack 30, and fastening members such as sets of bolts and nuts that fasten together the constraining plates. With the constraining member of the structure described above, the fastening members urge the constraining plates toward each other to apply a constraining load in the stacking direction to the cell stack 30.

### Examples

Specific examples of the above-described embodiment will now be described.

### Test Examples 1 to 5

A corona discharge process was performed on one surface of an aluminum foil, having a thickness of 30 µm, to hydrophilize that surface of the aluminum foil. A carbon paste was applied to the entire hydrophilized surface of the aluminum foil to form a film. The formed film was dried. Then, the film was subjected to heating at 150°C for ten seconds and then cooled to form a carbon coating layer. The obtained sheet materials were used as Test Examples 1 to 5.

The carbon paste used was prepared by kneading carbon particles, a coating layer binder, carboxyethyl cellulose (CMC), and water. Acetylene black was used as the carbon particles. An acrylic resin was used as the coating layer binder. The mass ratio of the solids in the carbon paste was 50:37.5:12.5 (carbon particles: coating layer binder: CMC). The amount of the solvent in the carbon paste was set such that a solid content ratio was 85 mass%. Test Examples 1 to 5 differed from each other in the weight per unit area of the carbon coating layer. The weight per unit area of the carbon coating layers of the sheet materials of Test Examples 1 to 5 are as shown in Table 1.

### Measurement of Contact Angle

A 4 µL water droplet was dropped onto the surface of the carbon coating layer of the sheet material of Test Example 4 using a dropper, and the contact angle of the water droplet formed on the surface of the carbon coating layer was measured. The contact angle of water with respect to the surface of the carbon coating layer was 27.4°. This result suggests that carboxyl groups are present on the surface of the carbon coating layer in an amount sufficient to reduce the contact angle of water to 40° or less, and further to 30° or less.

### Measurement of Bonding Strength

Rectangular sheet samples having dimensions of 10 mm in length and 50 mm in width were cut from the sheet materials of Test Examples 1 to 5. Rectangular sealing materials having dimensions of 10 mm in length and 50 mm in width were also prepared. As the sealing material, an acid-modified polyethylene sheet having a thickness of 120 µm and a melting point of 120°C was used. A laminate was obtained by stacking the sealing material on the sheet material with their edges aligned. Using an impulse sealer, the laminate was heated at 150°C for 10 seconds and then cooled to prepare a measurement sample in which the sheet material and the sealing material were bonded to each other.

The measurement samples were immersed in a liquid electrolyte at 60°C for 240 hours. As the liquid electrolyte, a non-aqueous electrolyte was used in which lithium hexafluorophosphate was dissolved at a concentration of 1.2 M in a mixed solvent obtained by mixing ethylene carbonate and methyl propionate at a volume ratio of 15:85.

After the immersion treatment, a 180-degree peel test was conducted on the measurement samples under conditions of a tensile speed of 10 mm/min and a temperature of 25°C. Peel strength of each measurement sample was calculated by dividing the strength measured in the 180-degree peel test by the line width of 10 mm, and the calculated value was defined as the bonding strength. The results are shown in Table 1. In the 180-degree peel test, the conditions of the immersion treatment were adjusted such that the samples were more easily peelable than under actual conditions, so that the bonding strength of Test Example 1 became 0 N/mm.

**[Table 1]**

| | Weight Per Unit (g/m²) | Bonding strength (N/mm) |
|---|---|---|
| Test Example 1 | 0 | 0 |
| Test Example 2 | 0.06 | 0 |
| Test Example 3 | 0.22 | 0.6 |
| Test Example 4 | 0.33 | 0.52 |
| Test Example 5 | 1.05 | 0.45 |

As shown in Table 1, in Test Example 2, in which the weight per unit area of the carbon coating layer was 0.1 g/m² or less, an increase in bonding strength due to provision of the carbon coating layer was not observed as compared with Test Example 1. In Test Examples 3 to 5, in which the weight per unit area of the carbon coating layer was 0.2 g/m² or more, the bonding strength increased significantly as compared with Test Example 1. In addition, within a range in which the weight per unit area of the carbon coating layer was 0.2 g/m² or more, the bonding strength tended to gradually decrease as the weight per unit area increased. From a tendency of decrease in bonding strength with respect to an increase in the weight per unit area of the carbon coating layer in a range of 0.22 to 1.05 g/m² (Test Examples 3 to 5), it can be seen that, by setting the weight per unit area to 1.0 g/m² or less, the degree of reduction in bonding strength from the maximum value obtained at a weight per unit area of 0.22 g/m² is limited to 25% or less.

### REFERENCE SIGNS LIST

M) Carbon Coating Layer
S) Sealed Space
10) Power Storage Device
20) Power Storage Cell
21) Positive Electrode
21a) Positive Electrode Current Collector
21b) Positive Electrode Active Material Layer
22) Negative Electrode
22a) Negative Electrode Current Collector
22b) Negative Electrode Active Material Layer
23) Separator
24) Sealing Portion
25) Bipolar Electrode
30) Cell Stack

## Claims

1. A power storage device, comprising a power storage cell, wherein
the power storage cell is formed by:
a positive electrode in which a positive electrode active material layer is provided on a first surface of a positive electrode current collector;
a negative electrode in which a negative electrode active material layer is provided on a first surface of a negative electrode current collector, the negative electrode active material layer being disposed to face the positive electrode active material layer of the positive electrode;
a separator disposed between the positive electrode active material layer and the negative electrode active material layer; and
a sealing portion disposed between the positive electrode and the negative electrode so as to surround a periphery of the positive electrode active material layer and a periphery of the negative electrode active material layer, the sealing portion being adhered to a first surface of the positive electrode current collector and a first surface of the negative electrode current collector so as to form a sealed space for accommodating a liquid electrolyte between the positive electrode and the negative electrode,
the sealing portion is formed of an acid-modified polyolefin resin,
the first surface of the positive electrode current collector is formed of aluminum,
the positive electrode includes a carbon coating layer provided on a portion of the first surface of the positive electrode current collector that is bonded to the sealing portion,
the carbon coating layer includes carbon particles and a coating layer binder, and
the carbon coating layer has a weight per unit area of 0.2 g/m² or more.

2. The power storage device according to claim 1, wherein the weight per unit area of the carbon coating layer is 1.0 g/m² or less.

3. The power storage device according to claim 1 or 2, wherein the coating layer binder includes a resin having a carboxyl group.

4. The power storage device according to any one of claims 1 to 3, wherein the carbon coating layer is provided over an entirety of the first surface of the positive electrode current collector.

5. The power storage device according to any one of claims 1 to 4, wherein
the power storage cell is one of multiple stacked power storage cells, and
the power storage device further comprises a bipolar electrode in which a surface of the positive electrode current collector of the positive electrode included in one of adjacent two of the power storage cells, the surface being located on an opposite side from the first surface of the positive electrode current collector, is joined to a surface of the negative electrode current collector of the negative electrode included in the other of the two adjacent power storage cells, the surface being located on an opposite side from the first surface of the negative electrode current collector.

6. The power storage device according to claim 5, wherein the first surface of the negative electrode current collector of the bipolar electrode is formed of copper.

7. The power storage device according to claim 5 or 6, wherein
the positive electrode current collector of the bipolar electrode is an aluminum foil,
the negative electrode current collector of the bipolar electrode is a copper foil,
the bipolar electrode is formed by bonding the positive electrode current collector and the negative electrode current collector by a conductive adhesive layer,
the conductive adhesive layer includes an adhesive and conductive particles,
the conductive particles include a resin core and a conductive layer located on a surface of the core, and
a content of the conductive particles in the conductive adhesive layer is in a range of 0.1 vol% to 1.0 vol%.

8. The power storage device according to any one of claims 5 to 7, wherein the bipolar electrode has the carbon coating layer provided on both the first surface of the positive electrode current collector and the first surface of the negative electrode current collector.
